# EUROPEAN PATENT APPLICATION

(11) **EP 4 691 968 A1**
(43) Date of publication of application: **11.02.2026**
(21) Application number: 24193946.1
(22) Date of filing: 09.08.2024
(51) Int. Cl.: C01B 3/04

(54) **PROCESS FOR PRODUCING A HYDROGEN PRODUCT**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Shrivastava, Swatantra Kumar, 60439 Frankfurt am Main (DE)
(74) Representative: Air Liquide

(57) **Abstract**

A process (100) for producing a hydrogen product (20) from a feedstock stream (10), the process (100) comprising the following steps:
- performing a combustion of a fuel gas (S11) to bring a heat input to the process (100) thereby generating a flue gas (52),
- pre-heating the ammonia stream (S3), said preheating being realized in a first heat exchanger (4) arranged to heat the ammonia stream by heat exchange with the flue gas,
- sending the pre-heated ammonia stream (12) to a vaporizer (5) and vaporizing (S4) said pre-heated ammonia stream,
- sending the vaporized ammonia (14) from said vaporizer (5) as said feedstock stream (S6) and/or sending the vaporized ammonia from said vaporizer as said fuel to said combustion (S11).

## Description

The field of the present invention is that of hydrogen production.

In the field of hydrogen production, it is known to use the vaporization of liquid ammonia by providing heat. A conventional process employs a tubular firebox type ammonia cracker, where ammonia is cracked into hydrogen (H2) and nitrogen (N2) over a catalyst. The heat required for the ammonia cracking reaction is supplied externally via fuel firing. Overall ammonia consumption can be reduced by integrating waste heat recovery from flue gas and cracked gas. For instance, with flue gas temperatures exiting the battery limits (BL) at approximately 130°C, based on the technology bricks used, an overall ammonia consumption of 7.25 kg/kg H2 can be achieved. However, efficiency losses in these schemes are attributed to waste heat lost in the hot flue gas.

The present invention aims to maximize heat recovery from the flue gas, thereby enhancing the energy efficiency of the process for producing a hydrogen product from a feedstock stream (for instance in an ammonia cracking process).

For this purpose, the invention proposes a process for producing a hydrogen product from a feedstock stream, the process comprising the following steps:
providing an ammonia stream,
introducing the feedstock stream into a gas conversion unit for performing a gas conversion thereby producing said hydrogen product,
performing a combustion of a fuel gas to bring a heat input to the process thereby generating a flue gas,
pre-heating the ammonia stream, said preheating being realized in a first heat exchanger arranged to heat the ammonia stream by heat exchange with the flue gas,
sending the pre-heated ammonia stream to a vaporizer and vaporizing said pre-heated ammonia stream,
sending the vaporized ammonia from said vaporizer as said feedstock stream and/or sending the vaporized ammonia from said vaporizer as said fuel to said combustion.

Such a process has the advantage of cooling the flue gas while heating the ammonia stream. Thus, the energy of the flue gas is not lost and the flue gas is discharged to the atmosphere at a lower temperature leading to a less negative impact on the environment.

In one embodiment, the ammonia stream is provided in a liquid form, typically at a temperature around -33°C.

In one embodiment, the ammonia stream is heated upstream the preheating step by heat exchange with said hydrogen product.

In one embodiment, the flue gas is discharged in a flue gas duct, the preheating step being performed in the first heat exchanger arranged in said flue gas duct.

In one embodiment, the temperature of the feedstock stream following the preheating step is between -33°C and 20°C, in particular between -33°C and 0°C.

In one embodiment, the hydrogen product is sent to the vaporizer to exchange heat with the ammonia stream in the vaporizer. In particular, the hydrogen product is sent to the vaporizer to exchange heat with the ammonia stream in the vaporizer and the thus cooled hydrogen product is sent to said heat exchange with the ammonia stream for heating said ammonia stream upstream the preheating step.

In one embodiment, the vaporizer comprises a flue gas heat exchanger arranged in the flue gas duct upstream of the first heat exchanger in the flue gas stream flow direction, to perform the vaporization of a liquid phase ammonia from the vaporizer.

Advantageously, because the ammonia stream is preheated with the flue gas instead of being pre-heated with waste heat from the hydrogen product, there is more remaining waste heat in the hydrogen product and this remaining waste heat may be used to heat the vaporizer.

In one embodiment, the pre-heated ammonia stream comprises liquid ammonia, in particular at least 99.5% liquid ammonia.

In one embodiment, the pre-heated ammonia is flashed in said vaporizer.

In one embodiment, the first heat exchanger is arranged, in particular arranged in the flue gas duct, to pre-heat the ammonia stream by condensing a condensable medium, in particular steam, comprised in said flue gas.

In one embodiment, during the preheating step, the temperature of the ammonia stream is raised from 10°C to 70°C. For example, the temperature of the ammonia stream is raised from 15°C to 60°C using the flue gas. In another example, the temperature of the ammonia stream is raised from 15°C to 35°C using the flue gas.

In one embodiment, during the preheating step, the temperature of the flue gas is reduced from 120°C to 60°C. For example, the temperature of the flue gas is reduced from 110°C to 70°C in the flue gas duct.

In one embodiment, the first heat exchanger is arranged in a section of the flue gas duct having a temperature between 120°C and 60°C.

In one embodiment, said combustion is performed to provide heat to the gas conversion. Said gas conversion is in particular an endothermic gas conversion.

In one embodiment, during the step of preheating the ammonia stream, the ammonia stream is preheated by heat exchange with a cooled flue gas, said flue gas being cooled by at least one air preheater. Said at least one air preheater is in particular arranged in the flue gas duct upstream of the first heat exchanger.

In one embodiment, the at least one air preheater comprises a hot air preheater and a cold air preheater and the flue gas is cooled by said hot air preheater and said cold air preheater, the cold preheater being arranged in a colder section of the flue gas duct than the hot pre-heater.

In one embodiment, the hot air preheater is in a section of the flue gas duct which is closer to the combustion than the cold air preheater.

In one embodiment, the air preheater is arranged to preheat a combustion air for performing said combustion of the fuel gas.

In one embodiment, the process comprises a secondary preheating step of the ammonia stream in a secondary pre-heater, said secondary pre-heater being arranged upstream the first heat exchanger on the ammonia stream flow, said secondary pre-heater being arranged to preheat the ammonia stream by heat exchange with the hydrogen product.

In one embodiment, the first heat exchanger in which the ammonia stream is preheated with the flue gas is arranged downstream the cold air preheater, which is arranged downstream the hot air preheater.

In one embodiment, the process comprises a step of producing steam, said steam being for example used as a heating medium in the vaporizer.

In one embodiment, the steam, for example used as a heating medium in the vaporizer, is generated by water used to cool the flue gas in an effluent gas boiler.

In one embodiment, the effluent gas boiler is arranged in the flue gas duct, in particular the effluent gas boiler is arranged downstream the hot air preheater and upstream the cold air preheater.

In one embodiment, the gas conversion comprises a cracking reaction of ammonia and produces a cracked gas as said hydrogen product.

In one embodiment, the gas conversion comprises a reforming reaction of a hydrocarbon and produces a synthesis gas as said hydrogen product.

In one embodiment, pre-heating the ammonia stream comprises condensing a condensable medium, in particular steam, comprised in said flue gas.

In one embodiment, the process comprises a step of recovering hydrogen from the hydrogen product, for example by pressure or temperature swing adsorption, and/or by partial condensation. A pure hydrogen stream comprising more than 90 mol%, preferably more than 95 mol%, preferably more than 99 mol% hydrogen may thereby be obtained.

The invention also proposes an installation for producing a hydrogen product from a feedstock stream, said installation comprising:
a gas conversion unit for the conversion of said feedstock stream into said hydrogen product,
a fired equipment,
a flue gas duct connected to the fired equipment to discharge a flue gas stream from said fired equipment,
a first heat exchanger arranged in the flue gas duct to preheat an ammonia stream by heat exchange with the flue gas stream,
a vaporizer configured to receive the pre-heated ammonia stream and to vaporize said pre-heated ammonia stream
a vaporized ammonia circulation duct, connecting the vaporizer with the gas conversion unit to provide the vaporized ammonia to the gas conversion unit as said feedstock stream and/or connecting the vaporizer with the fired equipment to provide the vaporized ammonia as a fuel to said fired equipment.
In one embodiment, the installation comprises an ammonia source connected to the first heat exchanger to provide said ammonia stream to said first heat exchanger. The ammonia source may for example be a liquid ammonia tank for storing ammonia in a liquid form, typically at a temperature comprised between -33°C and 20°C.

In one embodiment, the vaporizer comprises a second heat exchanger configured to exchange heat between the ammonia stream and the hydrogen product.

In one embodiment, the vaporizer comprises a flue gas heat exchanger arranged in the flue gas duct upstream of the first heat exchanger in the flue gas stream flow direction, to perform the vaporization of a liquid phase ammonia from the vaporizer.

In one embodiment, the second heat exchanger is arranged to receive the hydrogen product to exchange heat with the ammonia stream in said vaporizer.

In one embodiment, the installation is arranged to flash the pre-heated ammonia stream in said vaporizer.

In one embodiment, the installation comprises a pressure drop device arranged between the first heat exchanger and the vaporizer. Said pressure drop device is in particular configured to maintain the ammonia in the first heat exchanger in predominantly liquid form.

In one embodiment, the first heat exchanger is arranged in the flue gas duct to pre-heat the ammonia stream by condensing a condensable medium, in particular steam, comprised in said flue gas.

In one embodiment, the installation comprises at least one air preheater arranged in the flue gas duct upstream the first heat exchanger in the flue gas stream flow direction.

In one embodiment, the at least one air preheater comprises a hot air preheater and a cold air preheater, the cold preheater being arranged in a colder section of the flue gas duct than the hot preheater.

In one embodiment, the hot air preheater is arranged in a section of the flue gas duct which is closer to the fired equipment than the cold air preheater.

In one embodiment, the air preheater is arranged to preheat a combustion air for performing said combustion of the fuel gas.

In one embodiment, the installation comprises a secondary pre-heater being arranged upstream the first heat exchanger on the ammonia stream flow, said secondary pre-heater being arranged to preheat the ammonia stream with the hydrogen product upstream the first heat exchanger on the ammonia stream flow.

In one embodiment, the first heat exchanger in which the ammonia stream is preheated with the flue gas is arranged in the flue gas duct downstream the cold air preheater, which is arranged in the flue gas duct downstream the hot air preheater.

In one embodiment, the installation comprises an effluent gas boiler arranged to produce steam.

In one embodiment, the vaporizer is arranged to receive said steam as a heating medium.

In one embodiment, the effluent gas boiler is arranged in the flue gas duct, in particular the effluent gas boiler is arranged downstream the hot air preheater and upstream the cold air preheater.

In one embodiment, the gas conversion unit comprises a gas conversion reactor configured for the conversion of said feedstock stream. For example the gas conversion reactor may be a cracking reactor arranged for cracking ammonia as a feed. In another example the gas conversion reactor may be a reformer arranged for the reforming of hydrocarbons.

In one embodiment, the gas conversion unit comprises a furnace arranged in a thermal communication with the gas conversion reactor to provide heat to the gas conversion reactor and the fired equipment comprises said furnace.

In one embodiment, the installation comprises a hydrogen recovery unit, such as a pressure swing adsorption unit and/or a partial condensation unit, arranged to recover hydrogen from the hydrogen product.

The invention offers several advantages. By maximizing heat recovery from the flue gas, the system significantly reduces energy losses. For instance, in the invention, instead of using all the heat from cracked gas to preheat liquid ammonia to 70 °C, flue gas cooling from 110 °C to an appropriate temperature is employed. The surplus heat from the cracked gas that is not utilized in preheating is used to vaporize ammonia in the ammonia vaporizer. This allows for higher utilization of flue gas waste heat. Consequently, surplus waste heat available in the flue gas can then be used to preheat air to higher temperatures, resulting in an overall reduction in ammonia consumption.

Further features, details and advantages of the invention will become more clearly apparent from reading the description given below by way of indication with reference to the drawings, in which:

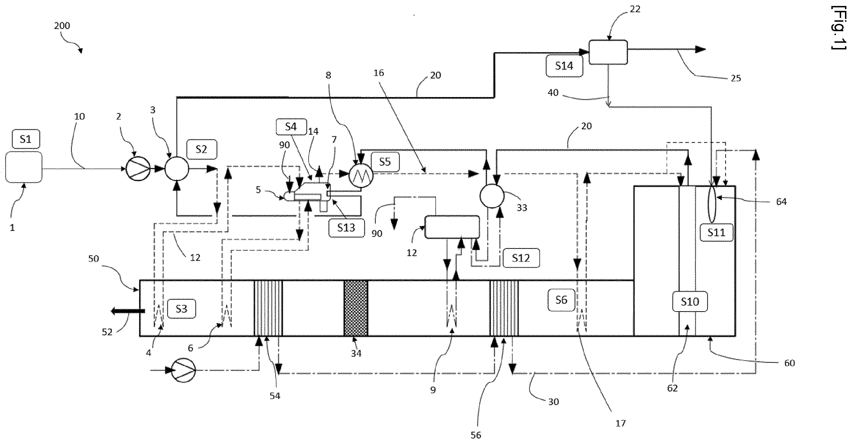

[Fig.1] is a schematic representation of the installation of the invention.

Figure 1 shows a process 100 for producing a hydrogen product 20 from a feedstock stream 10 (also called a liquid ammonia stream 10) comprising the following steps:
providing a liquid ammonia stream 10 (Step S1),
secondary preheating (Step S2) of the liquid ammonia stream 10 by heat exchange with the hydrogen product 20,
pre-heating the liquid ammonia stream 10 (Step S3), said preheating is performed in a first heat exchanger 4 arranged to heat the liquid ammonia stream 10 by heat exchange with the flue gas 52,
sending the preheated ammonia stream 12 to a vaporizer 5 and vaporizing (Step S4) said preheated ammonia stream 12,
superheating (Step S5) the vaporized ammonia stream 14 into a superheated vaporized ammonia stream 16 using heat supplied by the hydrogen product 20, sending the superheated vaporized ammonia stream 16 to a feed superheater 17 heated by heat exchange with the flue gas 52 (Step S6).
introducing the superheated vaporized ammonia stream 16 into a gas conversion unit 60 for performing a gas conversion (Step S10) thereby producing said hydrogen product 20,
performing a combustion of a fuel gas (Step S11) to bring a heat input to the process 100 thereby generating the flue gas 52,
recovering the hydrogen 25 from the hydrogen product 20 (Step S14).

Optionally a portion of the vaporized ammonia stream 14 is sent from said vaporizer 5 as fuel to said combustion.

The step of providing liquid ammonia stream 10 (Step S1) is made by a feed duct which is arranged to provide the liquid ammonia stream 10 from an ammonia source 1.

The secondary preheating (Step S2) is performed upstream the preheating step (Step S3). During the secondary preheating step (Step S2), the liquid ammonia stream 10 is heated from -33,5°C to 18 °C using hydrogen product 20 which is cooled from 100°C to 20 °C.

During the step of preheating (Step S3) by the first heat exchanger 4, the liquid ammonia stream 10 is preheated by heat exchange with flue gas 52.

The process 100 further comprises a step of exchanging heat (step S13) with the hydrogen product 20 sent to the vaporizer 5, and the preheated ammonia stream 12.

In a first embodiment, before supplying heat to the liquid ammonia stream 10, a cracked gas, as said hydrogen product 20, is first cooled from 160°C to 100°C in the vaporizer 5 (Step S13). The cold liquid ammonia stream 10 is preheated from -33°C to 18°C using the cracked gas (whose temperature is reduced from 100°C to 20°C) (Step S2). In the next step (Step S3), the cold ammonia stream is further preheated from 18°C to 35°C using flue gas 52 (which is cooled from 110°C to 66°C which is the dew point of the flue gas 52). The preheated ammonia stream 12 is heated from 36°C to 83°C during the exchanging heat step in the vaporizer 5 (step S13).

In a second embodiment, before supplying heat to the liquid ammonia stream 10, the cracked gas is first cooled from 160°C to 100°C in the vaporizer 5 (Step S13). The cold liquid ammonia stream 10 is preheated from -33°C to 17°C using the cracked gas (whose temperature is reduced from 100°C to 20°C) (Step S2). In the next step (Step S3), the cold ammonia stream is further preheated from 17°C to 69°C using flue gas 52 (which is cooled from 110°C to 60°C). At a selected cracking pressure, the ammonia already starts to vaporize at 69 °C. In order to keep the ammonia in liquid state in the first heat exchanger 4, discharge pressure of an ammonia feed pump 2 is increased in order to carry out heat exchange in the liquid phase. The high pressure hot liquid ammonia is then flashed into the vaporizer 5 (Step S4) based on the required cracking pressure. The extent of heat extraction from the flue gas 52 at cold end is imposed by the dew point of the flue gas and the cracking pressure (which imposes the ammonia feed pressure). The preheated ammonia stream 12 is heated from 69°C to 83°C during the exchanging heat step in the vaporizer 5 (step S13).

The step of superheating (Step S5) the vaporized ammonia stream 14 is performed at a temperature up to 550 °C, for instance the vaporized ammonia stream 14 is superheated from 83°C to 360°C, and the temperature of hydrogen product 20 is reduced, for example from 380°C to 160°C.

The step of gas conversion (Step S10) comprises a cracking reaction of ammonia and produces a cracked gas as said hydrogen product 20. Said gas conversion is in particular an endothermic gas conversion and is performed at a cracking temperature of 650°C in order to achieve a conversion rate higher than 95% of the feedstock stream 10.

During the step of recovering hydrogen 25 from the hydrogen product 20 (Step S14), the pure hydrogen 25 stream comprises more than 90 mol%, preferably more than 95 mol%, preferably more than 99 mol% hydrogen 25 is thereby obtained.

Furthermore, during the recovering hydrogen 25 from the hydrogen product 20 (Step S14) an unconverted ammonia 40 is recovered and used as fuel in the gas conversion reactor 62.

We will now describe the installation 200 for implementing the process described above.

Said installation 200 is connected by the feed duct to the ammonia source 1 which is a liquid ammonia tank for storing ammonia in a liquid form at a temperature of -33°C.

The gas conversion unit 60 provided with a gas conversion reactor 62 which is a cracking reactor arranged for cracking ammonia as a feed.

The gas conversion unit 60 further comprises a furnace arranged in a thermal communication with the gas conversion reactor 62 to provide heat to the gas conversion reactor 62 and a fired equipment 64 comprises said furnace.

The fired equipment 64 is connected to a flue gas duct 50 to discharge a flue gas 52 from said fired equipment 64.

The first heat exchanger 4 arranged in the flue gas duct 50 is connected to the ammonia source 1.

The vaporizer 5 is configured to receive the preheated ammonia stream 12 and to vaporize (step S4) said preheated ammonia stream 12 in the vaporized ammonia stream 14.

The vaporizer 5 is provided with a flue gas heat exchanger 6 arranged in the flue gas duct 50, upstream of the first heat exchanger 4. The flue gas heat exchanger 6 is arranged to perform the vaporization of a liquid phase of the ammonia from the vaporizer 5 by heat exchange with the flue gas, and the vaporized phase is returned from the flue gas heat exchanger 6 to the vaporizer 5.

By passing through the flue gas heat exchanger 6, the temperature of the flue gas 52 is reduced from 180°C to 110°C.

The vaporizer 5 comprises a second heat exchanger 7 which is arranged to receive the hydrogen product 20 in said vaporizer 5. The second heat exchanger 7 is configured to perform the step of exchange heat (Step S13) between the preheated ammonia stream 12 and the hydrogen product 20.

The installation 200 comprises a pressure drop device arranged between the first heat exchanger 4 and the vaporizer 5. Said pressure drop device is configured to maintain the ammonia in the first heat exchanger 4 in substantially liquid form.

The installation 200 further comprises a secondary preheater 3 which is arranged upstream the first heat exchanger 4 on the liquid ammonia stream 10 flow. The secondary preheater 3 is arranged to perform the secondary preheating step (Step S2) of the liquid ammonia stream 10 by heat exchange with the hydrogen product 20.

The installation 200 comprises two air preheaters 54 and 56 which are arranged in the flue gas duct 50 and comprise a cold air preheater 54 and a hot air preheater 56. The two air preheaters 54 and 56 are arranged to preheat a combustion air 30 sent to the fired equipment 64.

The flue gas 52 is cooled by said cold air preheater 54 and said hot air preheater 56.

The cold air preheater 54 is arranged in a colder section of the flue gas duct 50 than the hot air preheater 56. The hot air preheater 56 is in a section of the flue gas duct 50 which is closer to the combustion and fired equipment 64 than the cold air preheater.

The first heat exchanger 4 is arranged in the flue gas duct 50 downstream the cold air preheater 54, which is arranged in the flue gas duct 50 downstream the hot air preheater 56. In some embodiments, the first heat exchanger 4 is arranged in a cold enough section of the flue gas duct 50 so that steam contained in the flue gas is condensed by the pre-heating of said liquid ammonia stream. This allows to recover even more waste heat, in fact latent steam condensation heat, from the flue gas.

The installation 200 comprises a steam drum 12 fluidically connected to a effluent gas boiler 9. The effluent gas boiler 9 is arranged to send steam 90 to the steam drum 12. The effluent gas boiler 9 is arranged in the flue gas duct 50 downstream the hot air preheater 56 and upstream the cold air preheater 54. The effluent gas boiler 9 is arranged to produce steam 90 by water used to cool the flue gas.

Steam 90 is sent from the steam drum 12 to the vaporizer 5 provide heat to the vaporizer 5, as a heating medium in the vaporizer 5.

The installation 200 comprises a process gas boiler 33 configured to provide heat by the hydrogen product 20 to generate steam for the steam drum 12.

Thus, we have a step of producing steam 90 (Step S12) which is used as a heating medium in the vaporizer 5.

The installation 200 comprises a superheater 8 downstream of the vaporizer 5. The superheater 8 is arranged to superheat (Step S5) the vaporized ammonia stream 14 into the superheated vaporized ammonia stream 16.

The installation 200 comprises a hydrogen recovery unit 22. The hydrogen recovery unit 22 is arranged to perform the step of recovering the hydrogen 25 from the hydrogen product 20 (Step S14) by the pressure swing adsorption unit. The hydrogen recovery unit 22 is arranged to recover the unconverted ammonia 40 to be used as fuel in the gas conversion reactor 62. The hydrogen recovery unit 22 is, for the hydrogen product 20, downstream of the secondary preheater 3 which is the last heat exchanger for recovering heat from the hydrogen product 20.

The installation 200 comprises the feed pump 2 configured to supply the liquid ammonia stream 10 to the vaporizer 5. The feed pump 2 allows to increase the pressure of the liquid ammonia stream 10 from the battery limit to a target process pressure.

An SCR unit (Selective Catalytic Reduction) 34 may be placed in the flue gas duct 50 to reduce nitrogen oxide (NOx) emissions in the flue gas.

## Claims

1. A process (100) for producing a hydrogen product (20) from a feedstock stream (10), the process (100) comprising the following steps:
- providing an ammonia stream (S1),
- introducing the feedstock stream (10) into a gas conversion unit (60) for performing a gas conversion (S10) thereby producing said hydrogen product (20),
- performing a combustion of a fuel gas (S11) to bring a heat input to the process (100) thereby generating a flue gas (52),
- pre-heating the ammonia stream (S3), said preheating being realized in a first heat exchanger (4) arranged to heat the ammonia stream by heat exchange with the flue gas (52),
- sending the pre-heated ammonia stream (12) to a vaporizer (5) and vaporizing (S4) said pre-heated ammonia stream (12),
- sending the vaporized ammonia (14) from said vaporizer (5) as said feedstock stream (10) (S6) and/or sending the vaporized ammonia (14) from said vaporizer (5) as said fuel to said combustion (S11).

2. Process (100) according to claim 1, wherein the ammonia stream is heated (S2) upstream the preheating step (S3) by heat exchange with said hydrogen product (20).

3. Process (100) according to one of the preceding claims, wherein the hydrogen product (20) is sent to the vaporizer (5) to exchange heat (S13) with the ammonia stream in the vaporizer (5) and the thus cooled hydrogen product (20) is sent to said heat exchange with the ammonia stream for heating said ammonia stream (S2) upstream the preheating step (S3).

4. Process (100) according to any one of the preceding claims, wherein the pre-heated ammonia stream (12) comprises liquid ammonia with at least 99.5% liquid ammonia.

5. Process (100) according to any one of the preceding claims, wherein the pre-heated ammonia (12) is flashed in said vaporizer (5).

6. Process (100) according to any one of the preceding claims, wherein said combustion (S11) is performed to provide heat to the gas conversion (S10).

7. Process (100) according to any one of the preceding claims, wherein during the step of preheating (S3) the ammonia stream, the ammonia stream is pre-heated by heat exchange with a cooled flue gas (52), said flue gas (52) being cooled by at least one air pre-heater (54, 56).

8. Process (100) according to any one of the preceding claims, wherein the gas conversion (S10) comprises a cracking reaction of ammonia and produces a cracked gas as said hydrogen product (20).

9. An installation (200) for producing a hydrogen product (20) from a feedstock stream, said installation comprising:
- a gas conversion unit (60) for the conversion of said feedstock stream (10) into said hydrogen product (20),
- a fired equipment (64),
- a flue gas duct (50) connected to the fired equipment (64) to discharge a flue gas (52) stream from said fired equipment (64),
- a first heat exchanger (4) arranged in the flue gas duct (50) to preheat an ammonia stream by heat exchange with the flue gas (52) stream,
- a vaporizer (5) configured to receive the pre-heated ammonia stream (12) and to vaporize said pre-heated ammonia stream (12)
- a vaporized ammonia circulation duct, connecting the vaporizer (5) with the gas conversion unit (60) to provide the vaporized ammonia (14) to the gas conversion unit (60) as said feedstock stream (10) and/or connecting the vaporizer (5) with the fired equipment (64) to provide the vaporized ammonia (14) as a fuel to said fired equipment (64).

10. Installation (200) according to claim 9, wherein the vaporizer (5) comprises a second heat exchanger (7) configured to exchange heat between the ammonia stream and the hydrogen product (20).

11. Installation (200) according to claim 9 or 10, wherein the vaporizer (5) comprises a flue gas heat exchanger (6) arranged in the flue gas duct (50) upstream of the first heat exchanger (4) in the flue gas (52) stream flow direction, to perform the vaporization of a liquid phase ammonia from the vaporizer (5).

12. Installation (200) according to any one of claims 9 to 11, comprising a pressure drop device arranged between the first heat exchanger (4) and the vaporizer (5), said pressure drop device being in particular configured to maintain the ammonia in the first heat exchanger (4) in predominantly liquid form.

13. Installation (200) according to any one of claims 9 to 12, wherein the first heat exchanger (4) is arranged in the flue gas duct (50) to pre-heat the ammonia stream by condensing a condensable medium, in particular steam, comprised in said flue gas (52).

14. Installation (200) according to any one of claims 9 to 13, comprising at least one air preheater (54, 56) arranged in the flue gas duct (50) upstream the first heat-exchanger (4) in the flue gas (52) stream flow direction.

15. Installation (200) according to any one of claims 9 to 14, wherein the gas conversion unit (60) comprises a gas conversion reactor (62) configured for the conversion of said feedstock stream (10) and the gas conversion unit (60) comprises a furnace arranged in a thermal communication with the gas conversion reactor (62) to provide heat to the gas conversion reactor (62) and the fired equipment (64) comprises said furnace.
